# EUROPÄISCHE PATENTSCHRIFT

(11) **EP 0 508 028 B1**
(45) Veröffentlichungstag und Bekanntmachung des Hinweises auf die Patenterteilung: **06.12.1995**
(21) Anmeldenummer: 91810256.7
(22) Anmeldetag: 08.04.1991
(51) Int. Cl.: E06C 7/08, F16L 41/08

(54) **Verfahren zum Verbinden zweier Rohrstücke und nach dem Verfahren hergestellte Rohrverbindung**
Process for connecting two pipe sections and the pipe joint thus formed
Procédé pour raccorder deux éléments tubulaires et raccord en résultant

(43) Veröffentlichungstag der Anmeldung: 14.10.1992
(73) Patentinhaber: MSU-NORMEN Henri Zenhäusern AG, CH-8902 Urdorf (CH)
(72) Erfinder: Zenhäusern, Henri, CH-8902 Urdorf (CH)
(74) Vertreter: Rottmann, Maximilian R.

(56) Entgegenhaltungen:
- DE-B- 2 814 369
- DE-C- 826 246
- US-A- 3 881 572

## Beschreibung

Die vorliegende Erfindung bezieht sich auf ein Verfahren zum Verbinden zweier zumindest annähernd senkrecht zueinander stehender Rohrstücke, welche im Durchmesser verschieden sind. Das Verfahren eignet sich insbesondere zum Verbinden von Leitersprossen und Leiterholmen aus rostfreiem Stahl, wobei das Ende des dünneren Rohrstücks in bekannter Weise durch eine Mantelbohrung des dickeren Rohrs gegen die Innenwand desselben gepresst wird. In dieser Weise wird das sich in die Bohrung erstreckende Rohrende des dünneren Rohrs gestaucht bzw. nach aussen verspannt. Dieses Verfahren, welches sich besonders zum Verbinden vom Aluminiumrohrstücken eignet, kann schwerlich für Rohrstücke aus Chromnickelstahl verwendet werden, da ein Chromnickelstahl-Rohr nur durch die Anwendung von grösseren Kräften gestaucht bzw. verspannt werden kann, wobei die Stauchung sich unkontrollierbar entlang des Rohrs ausbreitet und zur Beschädigung des Rohrs führt, oder es entsteht anstelle eines rundlichen Stauchkragens eine undefinierbare Faltenbildung mit Diagonalverzug des Sprossenrohrs. Die Sprossen von Chromstahlleitern müssen deshalb geschweisst oder genietet werden, wobei jedoch bei diesem Vorgehen die Schweiss- oder Nietstellen sehr stark korrosionsgefährdet sind.

Aus der DE-PS 826 246 ist ein Verfahren zum Verbinden zweier Rohre der gattungsgemässen Art bekannt, bei welchem die zu stauchenden Enden des dünneren Rohrs geschlitzt werden. In diese geschlitzten Enden wird ein konischer Dorn eingeführt, welcher beim Einpressen des dünneren Rohrs in eine Mantelbohrung des dickeren Rohrs in das Ende des dünneren Rohrs hineingedrückt wird und dadurch dieses im geschlitzten Bereich aufweitet. Mit diesem Verfahren kann jedoch kein für eine Zuverlässige hochbelastbare Verbindung erforderlicher, eigentlicher Stauchwulst definierter Grösse und mit definierter Lage ausgebildet werden.

Der Erfindung liegt die Aufgabe zugrunde, ein Verfahren vorzuschlagen, mittels welchem die erwähnten Nachteile vermieden werden können, wobei beim Einpressen des dünneren Leiterrohrs durch eine Mantelbohrung desselben ein Stauchring oder -wulst mit vorbestimmtem Durchmesser gebildet werden sollte. Dabei soll auch verhindert werden, dass anstelle eines Stauchrings eine wulstförmige Verdickung mit unbestimmter Form entsteht, welche sich weit entlang des Sprossenrohrs erstreckt und die Stabilität desselben ernstlich gefährdet.

Erfindungsgemäss wird diese Aufgabe bei einem Verfahren, wie im Oberbegriff von Anspruch 1 beschrieben, durch die Merkmale im Kennzeichen des Anspruchs 1 gelöst. Darunter wird ein Vorgehen verstanden, bei welchem das Ende des zu stauchenden Rohrs vor dem Stauchvorgang im Querschnitt unverändert kreisringförmig bleibt und, zur Begrenzung der Ausdehnung des Stauchvorgangs am zu stauchenden Teil, ein Teil des zu stauchenden Sprossenrohrs im Querschnitt deformiert wird. Diese Deformation kann in der Verflachung des entsprechenden Teils des Sprossenrohrs bestehen, welches dadurch zusätzlich noch eine besonders geeignete abgleitsichere Fussraste bzw. Trittfläche aufweisen wird.

Das Verfahren kann in bevorzugter Weise so durchgeführt werden, dass in das zu verbindende Ende des dünneren Rohrs zunächst ein, einen konischen Abschnitt aufweisender Stopfen eingeführt und dieser anschliessend, samt dünnerem Rohr, durch die Mantelbohrung des dickeren Rohrs gegen die Innenwand desselben gepresst wird, wobei das dünnere Rohr, zum Begrenzen des Eindringens des konischen Teils in dasselbe, vorgängig örtlich im Querschnitt deformiert wird.

Die Übergangsstelle zwischen dem deformierten und nicht-deformierten Teil des Rohrs bildet einen Grenzanschlag, welcher ein weiteres Eindringen des konischen Teils in das dünnere Rohr zuverlässig verhindert. Wird ein Teil des dünneren Rohrs zu einer Trittfläche verflacht, so bilden die beidseitigen Übergänge des verflachten Teils des am Anfang und am Ende vorhandenen Rohrquerschnitts die Längsbegrenzung der gestauchten Teile, welche das Weitereindringen des zugehörigen Stopfens verhindern.

Die Erfindung bezieht sich ferner auf eine nach dem Verfahren hergestellte Rohrverbindung zwischen einem Leiterholm und einer Leitersprosse, die aus rostfreiem Stahl bestehen kann. Die Rohrverbindung weist eine Sprosse mit mindestens einer örtlich begrenzten Querschnittsdeformation auf, welche das Stauchen des Sprossenendes im Leiterholm örtlich begrenzt.

Werden in die Enden der Leitersprossen Stopfen eingesetzt, so weisen diese einen konischen Schaft und einen runden vorstehenden Kopf auf, welcher der Innenwölbung des Leiterholms entsprechend geformt ist. Das Eindringen des konischen Schafts in das Sprossenrohr wird wieder durch eine örtliche Querschnittsänderung des Sprossenrohrs begrenzt.

Auf beiliegender Zeichnung ist ein Ausführungsbeispiel einer Rohrverbindung schematisch dargestellt, aufgrund deren auch das Verfahren näher erläutert wird. Es zeigen:
- Fig. 1: eine schematisch gezeichnete Rohrverbindung, teilweise im Schnitt;
- Fig. 2: einen in Verbindung mit der Rohrverbindung zu gebrauchenden Stopfen; und
- Fig. 3: das Sprossenrohr aus Fig. 1, welches entlang der Ebene 3/3 der Fig. 1 geschnitten ist.

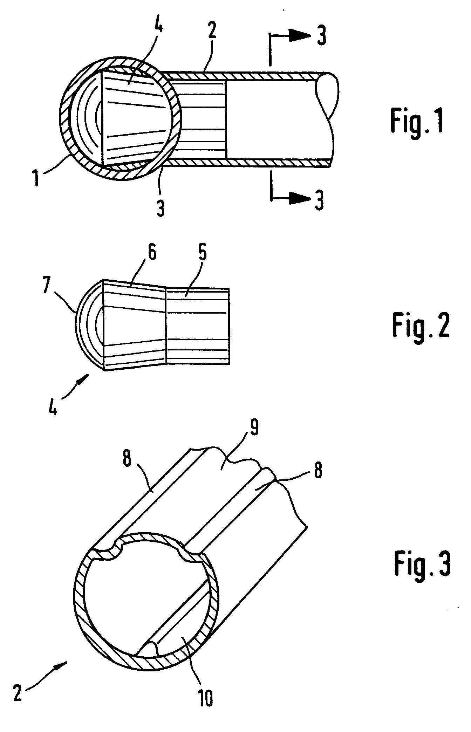

Die Rohrverbindung aus rostfreiem Stahl ist, wie bereits erwähnt, zwischen einem Leiterholm 1 und einer Leitersprosse 2, welche im Durchmesser kleiner ist als der Holm 1, anwendbar. Das Ende 3 der Sprosse 2 wird durch eine Mantelbohrung des dikkeren Rohrs, hier des Leiterholms 1, geführt, nachdem in das genannte Sprossenende ein Stopfen 4 eingeführt wurde. Der Stopfen 4 ist aus Fig. 2 ersichtlich und besteht vorzugsweise aus Kunststoff. Der konische Stopfen ist mit einem zylindrisch auslaufenden Schaft 5 und mit einem anschliessenden, sich komisch erweiternden Teil 6 versehen, welcher andernends in einem halbrunden, vorstehenden Kopf 7 übergeht. Dieser Kopf 7 ist vorzugsweise der Innenwölbung des Leiterholms 1 entsprechend geformt.

Das Ende 3 der Sprosse 2 ist im Querschnitt rund ausgebildet, während der mittlere Sprossenteil ausserhalb des eingesetzten Stopfens deformiert ist. Dieser deformierte Teil ist in Fig. 3 schaubildlich dargestellt. Es ist dabei ersichtlich, dass die Sprosse 2 mit Längskerben 8 ausgerüstet ist, welche gleichzeitig eine verbreiterte Trittauflage 9 bildet. Es ist selbstverständlich auch möglich, anstelle der Längskerbe eine andere Deformation vorzusehen. Zweckmässigerweise können Längsrippen 10 eingesetzt werden, die an der Stelle enden müssen, an der das Eindringen des Stopfens 4 aufgehalten werden sollte. Die gebildete verflachte Trittauflage kann mit Begrenzungsrippen versehen sein, die sich über der im Querschnitt nicht wellenförmigen Oberfläche der Trittauflage erheben und somit eine gleitende Fussraste bilden.

Zum Bilden der Verbindung wird der zylindrische Schaft 5 des Stopfens 4 in das im Querschnitt runde Ende der Sprosse 2 eingesetzt und die Sprosse 2 samt Stopfen 4 durch die Mantelbohrung des Leiterholms 1 in das Innere desselben eingeführt, so dass der runde, vorstehende Kopf 7 gegen die Innenwand des Leiterholms 1 zur Auflage kommt. Mit wachsendem Druck wird die Sprosse 2 gegenüber dem Stopfen 4 bewegt und das Ende der Sprosse 2 wird dabei durch den konisch erweiterten Teil 6 des Stopfens 4 auseinandergetrieben, so dass der Randteil des Sprossenendes 2 zu einem Stauchring verformt oder verspannt wird. Die Verformung wird aber dadurch begrenzt, dass die Sprosse 2 nicht unbeschränkt gegen den Stopfen 4 bewegt werden kann, sondern nur so weit, bis die deformierte Form oder das Ende der Rippe 10 auf das Ende des zylindrischen Schafts 5 anstösst. Die wesentlich verminderte Querschnittsfläche der Sprosse 2 erlaubt nämlich ein weiteres Verschieben derselben gegenüber dem Stopfen 4 nicht mehr. Damit wird eine Weiterverpflanzung der Stauchbildung zuverlässig verhindert, so dass weder der Leiterholm noch die Sprosse beschädigt bzw. deformiert werden kann.

Die beschriebene Verbindung kann u.U. auch ohne Stopfen gebraucht werden. In diesem Falle wird die Leitersprosse direkt durch die Mantelbohrung eingeführt und gegen die Innenwand des Leiterholms 1 gepresst. Das Ende der Leitersprosse 2 wird dann gestaucht, wobei die Stauchwirkung sich nur bis zur Stelle, an welcher die Sprosse im Querschnitt deformiert wird, erstreckt.

Die zuletzt beschriebene vereinfachte Ausführung genügt oft, um den gestellten Anforderungen zu entsprechen, wobei diese Lösung kostengünstiger ausgeführt werden kann. Das Einbringen des Stopfens bringt, im Gegensatz zur einfachen Lösung, noch den Vorteil mit sich, dass das durch die Bohrung geschwächte Rohr erheblich gestärkt und stabilisiert wird. Dies ist auch ein Vorteil gegenüber einer Sprossenbefestigung durch Schweissen.

## Patentansprüche

1. Verfahren zum Verbinden zweier zumindest annähernd senkrecht zueinander stehender Rohrstücke (1, 2) mit unterschiedlichem Durchmesser, insbesondere zum Verbinden von Leitersprossen und Leiterholmen aus rostfreiem Stahl, wobei das Ende des im Querschnitt kreisringförmigen dünneren Rohrstücks (2) durch eine Mantelbohrung des dickeren Rohrs (1) gegen die Innenwand desselben gepresst wird, so dass das sich in die Bohrung erstreckende Rohrende des dünneren Rohrs (2) gestaucht bzw. nach aussen verspannt wird, dadurch gekennzeichnet, dass die Längsausdehnung des zu stauchenden Endes des dünneren Rohrs (2), vor dem Einpressen desselben, durch eine Querschnittsänderung des dünneren Rohrs (2) derart begrenzt wird, dass das zu stauchende Ende des dünneren Rohrs (2) im Querschnitt unverändert kreisringförmig belassen wird, während zur Begrenzung der Ausdehnung des Stauchvorgangs am zu stauchenden Teil des dünneren Rohrs (2) ein Teil des verbleibenden dünneren Rohrs (2) im Querschnitt deformiert wird.

2. Verfahren nach Anspruch 1, dadurch gekennzeichnet, dass in das zu stauchende Ende des dünneren Rohrs (1) zunächst ein einen konischen Abschnitt (6) aufweisender Stopfen (4) eingeführt und anschliessend dieser samt dünnerem Rohr (2) durch die Mantelbohrung des dickeren Rohrs (1) gegen die Innenwand desselben gepresst wird, wobei das dünnnere Rohr (2), zum Begrenzen des Eindringens des konischen Abschnitts (6) in dasselbe, vorgängig im Querschnitt örtlich begrenzt deformiert wird.

3. Verfahren nach den Ansprüchen 1 und 2, dadurch gekennzeichnet, dass das dünnere Rohr (2) zur Querschnittsänderung mit Längsrippen versehen wird, deren Enden einen Begrenzungsanschlag für das Eindringen des konischen Abschnitts (6) bzw. für die Fortpflanzung der Stauchung in der Längsrichtung bilden.

4. Verfahren nach den Ansprüchen 1 und 2, dadurch gekennzeichnet, dass ein Teil des dünneren Rohr (2) zu einer Trittauflage (9) verflacht wird, wobei die beidseitigen Übergänge des verflachten Teils zum Rundquerschnitt die Längenbegrenzungen der gestauchten Enden und damit für das Eindringen der Stopfen (4) bilden.

5. Nach dem Verfahren nach den Ansprüchen 1 bis 4 hergestellte Rohrverbindung zwischen einem Leiterholm (1) und einer Leitersprosse (2) aus rostfreiem Stahl, dadurch gekennzeichnet, dass dieselbe eine Sprosse (2) mit mindestens einer örtlich begrenzten Querschnittsdeformation aufweist, welche mindestens eine Deformation das Stauchen des Sprossenendes im Leiterholm örtlich begrenzt.

6. Rohrverbindung nach Anspruch 5, dadurch gekennzeichnet, dass in den Enden der Leitersprosse (2) Stopfen (4) eingesetzt sind, welche einen zylindrischen Schaft (5), einen konischen Abschnitt (6) und einen runden, vorstehenden Kopf (7) aufweisen, welcher der Innenwölbung des Leiterholms (1) entsprechend geformt ist, wobei das Eindringen des Stopfens (4) in das Sprossenrohr durch eine örtliche Querschnittsänderung desselben begrenzt ist.

7. Rohrverbindung nach den Ansprüchen 5 und 6, dadurch gekennzeichnet, dass dieselbe eine Leitersprosse (2) mit verflachter Trittauflage (9) aufweist, wobei die beidseitigen Enden der Trittauflage (9) als Anschlag zur Begrenzung der in das Sprossenrohr (2) eingepressten Stopfen (4) ausgebildet sind.

8. Rohrverbindung nach den Ansprüchen 5 bis 7, dadurch gekennzeichnet, dass die verflachte Trittauflage (9) zusätzlich mit Längskerben (8) ausgerüstet ist.

9. Rohrverbindung nach den Ansprüchen 5 bis 8, dadurch gekennzeichnet, dass die Trittauflage (9) mit Begrenzungsrippen versehen ist, die sich über die im Querschnitt leicht wellenförmigen Oberfläche der Trittauflage erheben.

## Claims

1. Method for connecting two tube sections (1, 2) lying at least approximately at right angles to each other and with different diameters, in particular for connecting ladder rungs and ladder beams of stainless steel, the end of the thinner tube section (2) of annular cross-section being pressed through a surface bore in the thicker tube (1) against the inner wall thereof, so that the tube end of the thinner tube (2) extending into the bore is compressed or braced towards the outside, characterised in that the longitudinal extent of the end of the thinner tube (2) to be compressed, before the pressing-in thereof, is defined by a cross-sectional variation of the thinner tube (2) so that the end of the thinner tube (2) to be compressed is left unchanged with a cross-section in the shape of a circular ring, whereas in order to limit the extent of the compression process on the part of the thinner tube (2) to be compressed, a part of the remaining thinner tube (2) is deformed in its cross-section.

2. Method according to Claim 1, characterised in that introduced into the end to be compressed of the thinner tube (2) is first of all a plug (4) having a conical section (6) and then the latter, together with the thinner tube (2), is pressed through the surface bore of the thicker tube (1) against the inner wall thereof, in which case the thinner tube (2), for limiting the penetration of the conical section (6) into the latter, is previously deformed in cross-section locally in a limited manner.

3. Method according to Claims 1 and 2, characterised in that for varying the cross-section, the thinner tube (2) is provided with longitudinal ribs, whereof the ends form a limiting abutment for the penetration of the conical section (6) or for the propagation of the compression in the longitudinal direction.

4. Method according to Claims 1 and 2, characterised in that a part of the thinner tube (2) is flattened to form a tread (9), the transitions on both sides of the flattened part to the round cross-section forming the longitudinal boundaries of the compressed ends and thus for the penetration of the plugs (4).

5. Tube joint produced in accordance with the method according to Claims 1 to 4 between a ladder beam (1) and a ladder rung (2) of stainless steel, characterised in that the latter comprises a rung (2) with at least one locally defined cross-sectional deformation, which at least one deformation locally defines the compression of the end of the rung in the ladder beam.

6. Tube joint according to Claim 5, characterised in that inserted in the ends of the ladder rungs (2) are plugs (4), which comprise a cylindrical shaft (5), a conical section (6) and a round, projecting head (7), which is shaped to correspond to the inner curvature of the ladder beam (1), the penetration of the plug (4) into the rung tube being limited by a local cross-sectional variation thereof.

7. Tube joint according to Claims 5 and 6, characterised in that the latter comprises a ladder rung (2) with a flattened tread (9), both ends of the tread (9) being constructed as a stop for limiting the plug (4) pressed into the rung tube (2).

8. Tube joint according to Claims 5 to 7, characterised in that the flattened tread (9) is additionally provided with longitudinal grooves (8).

9. Tube joint according to Claims 5 to 8, characterised in that the tread (9) is provided with boundary ribs, which rise above the surface of the tread having a slightly undulating cross-section.

## Revendications

1. Procédé pour raccorder deux bouts de tube (1, 2) au moins approximativement perpendiculaires l'un à l'autre avec un diamètre différent, notamment pour relier des échelons et des montants d'échelle en acier inoxydable, l'extrémité du bout de tube (2) plus mince avec une section en forme de couronne circulaire étant pressée par un alésage d'enveloppe du tube (1) plus épais contre la paroi interne, de sorte que l'extrémité du tube (2) plus mince s'étendant dans l'alésage est refoulée et déformée vers l'extérieur, caractérisé en ce que l'extension longitudinale de l'extrémité à refouler du tube (2) plus mince est limitée, avant l'enfoncement de celui-ci, par une modification de la section du tube (2) plus mince de telle façon que l'extrémité à refouler du tube (2) plus mince est laissée en forme de couronne circulaire sans modification de la section, tandis que, pour Imiter l'extension du refoulement sur la partie à refouler du tube (2) plus mince, on déforme dans la section une partie du tube (2) plus mince restant.

2. Procédé selon la revendication 1, caractérisé en ce que, dans l'extrémité à refouler du tube (1) plus mince, on introduit d'abord un bouchon (4) présentant un tronçon (6) conique puis celui-ci avec le tube (2) plus mince est pressé par l'alésage de l'enveloppe du tube (1) plus épais contre la paroi interne de celui-ci, le tube (2) plus mince étant déformé auparavant localement de façon limitée dans la section pour imiter la pénétration du tronçon (6) conique dans le tube.

3. Procédé selon les revendications 1 et 2, caractérisé en ce que le tube (2) plus mince est pourvu pour la modification de la section de nervures longitudinales dont les extrémités forment une butée de limitation pour la pénétration du tronçon (6) conique et pour la propagation du refoulement dans le sens longitudinal.

4. Procédé selon les revendications 1 et 2, caractérisé en ce qu'une partie du tube (2) plus mince est aplatie en un support de marche (9), les transitions des deux côtés de la partie aplatie avec la section circulaire formant les limitations en longueur des extrémités refoulées et donc pour la pénétration des bouchons (4).

5. Raccord de tube fabriqué selon le procédé conforme aux revendications 1 à 4 entre un montant (1) et un échelon d'échelle (2) en acier inoxydable, caractérisé en ce que celui-ci présente un échelon (2) avec au moins une déformation limitée localement de la section, une déformation au moins limitant localement le refoulement de l'extrémité de l'échelon dans le montant de l'échelle.

6. Raccord de tube selon la revendication 5, caractérisé en ce que, dans les extrémités de l'échelon (2), on insère des bouchons (4) qui présentent une tige (5) cylindrique, un tronçon (6) conique et une tête (7) ronde et faisant saillie qui est formée en fonction du bombement interne du montant (1), la pénétration du bouchon (4) dans le tube de l'échelon étant limitée par une variation locale de la section de celui-ci.

7. Raccord de tube selon les revendications 5 et 6, caractérisé en ce que celui-ci présente un échelon (2) avec un support de marche (9) aplati, les extrémités des deux côtés du support de marche (9) étant conçues comme butée pour la limitation des bouchons (4) enfoncés dans le tube d'échelon.

8. Raccord de tube selon les revendications 5 à 7, caractérisé en ce que le support de marche (9) aplati est équipé en supplément d'entailles longitudinales (8).

9. Raccord de tube selon les revendications 5 à 8, caractérisé en ce que le support de marche (9) est pourvu de nervures de limitation qui s'élèvent au-dessus de la surface légèrement ondulée dans la section du support de marche.
